# EUROPEAN PATENT APPLICATION

(11) **EP 4 092 620 A1**
(43) Date of publication of application: **23.11.2022**
(21) Application number: 21175108.6
(22) Date of filing: 20.05.2021
(51) Int. Cl.: G06T 7/00

(54) **A SYSTEM FOR RECORDING A HIGH-QUALITY WOUND IMAGE AND FOR REAL-TIME IMAGE QUALITY ASSESSMENT**

(71) Applicant: ETH Zurich, 8092 Zürich (CH)
(72) Inventor: ZHANG, Jia, 8050 Zurich (CH); SCEBBA, Gaetano Claudio, 8052 Zurich (CH); KARLEN, Walter, 8112 Otelfingen (CH)
(74) Representative: Schulz Junghans Patentanwälte PartGmbB

(57) **Abstract**

The invention relates to a system for recording a wound image comprising a computerized mobile device, comprising a camera, a processor, a non-transitory storage medium, a photo box, wherein the non-transitory storage medium comprises a computer program stored thereon, wherein the computer program, when executed on the processor of the mobile device, executes at least the steps of:
a) upon user input, causing the camera of the mobile device to record an image of the image region with a plurality of pixels comprising pixel values,
b) determining an objective sharpness value by evaluating the pixel values of the pixels comprising the recorded reference marker, wherein the sharpness value is indicative of the sharpness of the recorded reference marker in the image,
c) displaying a feedback information on the display of the device, wherein in case the sharpness value is below a threshold value stored in the non-transitory storage medium, the feedback information indicates that the image has to be retaken,
d) repeating steps a) to c) with a different focus of the camera until the sharpness value exceeds the threshold value,
e) digitally storing the image in the non-transitory storage medium of the mobile device.

## Description

### Specification

The invention relates to a system for recording a high-quality wound image and for real-time image quality assessment. Further, the invention relates to a computer-implement method and a computer program for high-quality wound image recording and for real-time image quality assessment.

In the treatment of wounds and particularly in the treatment of systemic sclerosis (SSc) and digital ulcer or diabetic ulcer, repeated inspection of the wounds is necessary. This is typically done during a visit of the patient at the professional care taker, However, as telemedicine advances, it becomes possible to transmit images of the wound to the professional, which inspects the wound based on the image. There are many problems ranging from patient compliance to the image quality of home-recorded images using conventional cameras integrated in mobile phones.

The latter has been a topic of recent advances. In the art, several imaging systems are known that allow assessment of the size of a wound area Wang et al. ("Point-of-care wound visioning technology: Reproducibility and accuracy of a wound measurement app", PLOS, August 17, 2017; https://doi.org/10.1371/journal.pone.0183139) discloses a reference marker for color and scale that is positioned in the field of view of the camera on the skin next to the wound before an image is taken from the wound. Once the image is recorded edges of the wound are semi-automatically detected and a wound area is calculated using the reference marker recorded in the image. However, Wang et al does not provide a reliable tool to have an ideal camera position relative to the wound such that image sections are non-reliable chosen and may be blurred due to camera movement. Further, Wang does not provide an image-quality assessment.

However, particularly for assessing a wound, the wound image has to be in-focus, and color representation in the image must not be distorted.

An object of the present invention is, to provide a system for recording a high-quality wound image and for real-time image quality assessment. The object is achieved by the system according to claim 1.

Advantageous embodiments are described in the dependent claims.

According to a first aspect, a system for recording a high-quality wound image of a wound and for real-time image quality assessment comprises at least the components:
- a computerized mobile device, such as a mobile phone, comprising a camera, a processor, a non-transitory storage medium and a display operably connected with each other,
- a reference marker for color and sharpness evaluation comprising a plurality of contrast steps particularly together with three or more color-patches forming a gamut comprising red, green and blue,
- wherein the non-transitory storage medium comprises a computer program stored thereon, wherein the computer program, when executed on the processor of the mobile device, executes at least the steps of:
   a) upon user input, causing the camera of the mobile device to record an image of an image region comprising the wound and the reference marker, wherein the image comprises a plurality of pixels comprising pixel values,
   b) determining an objective sharpness value by evaluating the pixel values of the pixels comprising the recorded reference marker or all pixels of the image, wherein the sharpness value is indicative of the sharpness of the recorded reference marker in the image,
   c) displaying a feedback information on the display of the device, wherein in case the sharpness value is below a threshold value stored in the non-transitory storage medium, the feedback information indicates that the image has to be retaken,
   d) repeating steps a) to c) with a different focus of the camera until the sharpness value exceeds the threshold value,
   e) digitally storing the image in the non-transitory storage medium of the mobile device,
   f) particularly transmitting the image from the mobile device to an external computer for further processing and evaluation of the image region and the wound in particular.

The system according to the invention allows for evaluating an image quality particularly by determining a sharpness of the reference marker. The system is not limited to wounds on a finger, but may be applied also to other types of wounds, such as diabetic foot ulcers, arterial or venous ulcers, surgery wounds, etc.

The system provides a feedback mechanism to the user such that high quality wound image recording may be achieved with the system according to the invention.

According to another embodiment of the invention, the reference marker may also be used for color and size reference in a recorded wound image.

A contrast step of the reference marker consists for example of a change in color or luminance. The contrast step may be an edge at which two different colors of the reference marker adjoin.

Particularly, the contrast step may provide a contrast such that an autofocus of the camera may be able to focus on the reference marker.

The computer program may be configured to issue an information to a user of the system to place the extremity with the wound in the wound placement portion prior to step a).

A user input may be any input via an interface of the mobile device. For example, a user input may be provided via the display, in case the display is a touch sensitive display. In addition, or alternatively, the user input may be issued by means of a voice or a sound command that is recorded by a microphone of the mobile device.

According to another embodiment of the invention, after receiving the user input, the recording of the image is delayed by a predefined time, particularly by a time longer than 1 second.

The determination of the objective sharpness value in step b) particularly requires an analysis comprising the electronic read-out of a plurality of pixel values of the camera pixels.

The objective sharpness value particularly requires the evaluation and processing of more than 1.000 pixel values. Particularly, the objective sharpness value may be obtained in real-time, that is particularly not later than 1 second after recording of the image.

The objective sharpness value of the reference marker is an indicator of the image quality. The higher the sharpness of the image the better the image quality.

Displaying of the feedback information may be achieved by means of a message on the display.

In step d) the image may be retaken depending on the determined objective sharpness value. Retaking the image may be achieved by user input.

Particularly, for refocusing the camera of the mobile device another user input may be provided by the user, such as tapping on the touch sensitive display.

According to another embodiment of the invention, the computer program is configured to display in real time the field of view of the camera on a portion of the display.

For example, by tapping on the region of the display that displays the reference marker a refocusing effort may be initiated on the camera, such that a repetition of the recording provides an improved image in terms of the objective sharpness value.

Alternatively, the refocusing may be initiated automatically by the device upon repetition of the steps a) to c). the computer program may be configured to provide corresponding instructions to the processor and the camera.

The image that yields an objective sharpness value that exceeds the threshold value is stored and is deemed sufficiently good to ensure a reliable inspection of the wound. For this purpose, the image may be transmitted to an external computer that processes the image further.

According to another embodiment of the invention, the computer program is configured generate or update a data structure such as an event log file stored on the non-transitory storage medium to each time the image is retaken. Information stored in the event log file may comprise the date and time, as well as the number of the trial.

This embodiment allows improving usability of the system, by identifying users that may have problems via the number of trials necessary to achieve a suitable image.

According to another embodiment of the invention, particularly, the system further comprises a photo box with a bottom portion and top portion spaced apart by a fixed distance, wherein the top portion is configured to receive the mobile device such that a field of view of the camera comprises the image region at the bottom of the photo box, particularly wherein the image region coincides with at least a portion of the bottom portion.

According to this embodiment the reference marker is comprised by the image region of the bottom portion.

The photo box further comprises a wound placement portion comprised by the image region, wherein the wound placement portion is located next to the reference marker and configured to receive the extremity with the wound, particularly wherein the extremity is a finger.

The top and the bottom portion are particularly by a fixed distance between 10 cm and 50 cm, more particularly between 30 cm and 40cm.

According to another embodiment of the invention, the top portion forms a ceiling of the photo box.

According to another embodiment of the invention, the top portion comprises a receiving portion that is configured to receive the mobile device such that a field of view of the camera comprises an image region of the bottom portion. The receiving portion may comprise protrusions, at least one recess or fixing elements configured to mount the mobile device at a predefined position or in a predefined orientation.

According to another embodiment of the invention, the bottom portion comprises leg elements that are configured to form a space between the photo box and a surface on which the photo box may be arranged on, such that a user is able to stick an extremity through as it is possible to access the bottom portion from the outward facing side of the bottom portion.

The photo box may be made from a plastic material, wherein at least the receiving portion comprises a transparent portion or an opening such that the camera may capture an image from an inside of the photo box with the wound placement portion.

The opening has the advantage that no additional residual distortions or reflections are introduced in the light path.

Particularly, the photo box has non transparent wall members and a non-transparent bottom portion, wherein an inward facing side of the bottom portion, and particularly the wall members, have or has a predefined color or is colored in a neutral gray or white.

According to another embodiment of the invention, at least the bottom portion, but particularly also the wall members, comprise(s) predefined a reflectance on the inward side facing, particularly wherein the reflectance is in the range of 10% to 25%.

According to another embodiment of the invention, at least the bottom portion, but particularly also the wall members, are made from a non-glare material i.e., a material that provides a diffuse reflection of light towards the inside of the photo box.

As such, the bottom portion may serve as a middle gray reference for providing a consistent exposure and/or color for the wound image to be taken.

The image region of the photo box is particularly a region on the bottom portion that is in a field of view of the camera, when the mobile device is arranged on the top portion particularly at the receiving portion. While cameras may differ in their focal length (that determines a field of view of the camera), the distance between the top and the bottom portion is chosen such that the image region is also comprised in the field of view for cameras having a comparably large focal length, particularly a focal length equivalent of 100 mm. The focal length equivalent is the focal length of the camera of the mobile device that corresponds to a focal length of a lens of a camera having a 35 mm sensor.

According to another embodiment of the invention, the wound placement portion is configured to receive the extremity through a side portion, particularly through an opening of a wall member of the photo box and/or to receive the extremity with the wound via a through-hole through which the extremity such as the finger may be stuck through from an outward facing side of the bottom portion to an inward facing side of the bottom portion that is comprised by the image region.

Particularly, the through hole is between 1.5 cm and 4,5 cm in diameter, more particularly between 2 cm and 3 cm.

According to another embodiment of the invention, the compute program is an application of the mobile device that may be started via a user input.

According to another embodiment of the invention, the objective sharpness value is determined by applying a Laplacian filter to the pixels comprising the reference marker, wherein the objective sharpness value corresponds to a variance of the filtered pixels.

It is noted that the Laplacian filter may not be calculated for the entire image but only for selected pixels that comprise the reference marker.

The Laplacian filter allows for detecting edges of the photographed reference marker, wherein a Variance of the Laplacian filtered pixels of the recorded image yields the objective sharpness value.

According to another embodiment of the invention, a reference value is stored on the non-transitory storage medium, wherein said reference value corresponds to the variance of the Laplacian filtered pixels comprising an in-focus image of the reference marker.

Particularly, the threshold value corresponds to a fraction of the reference value, e.g. 0.8 times to 1 time the reference value. This embedment allows for an objective definition of the threshold value.

Particularly, for determining the Laplacian and the variance of the Laplacian filtered pixels, the same number pixels along a row and a column of the image are evaluated. This ensures that the objective sharpness value is not comparable between different images.

According to another embodiment of the invention, the variance of the Laplacian filtered pixels comprising the reference marker in an in-focus image is known, particularly wherein said variance of the Laplacian corresponds to the reference value.

According to another embodiment of the invention, the computer program is further configured to execute the step of automatically detecting the pixels in the image comprising the reference marker.

Particularly, the computer program executes a pattern matching or similarity analysis of the Laplacian filtered pixels with a model shape that corresponds to an outer contour of the reference marker.

For example, in case the reference marker has a rectangular shape, the model shape is a rectangle that has the size of the reference marker in the image. The Laplacian filtered image comprises a rectangular feature at the contour of the reference marker. The computer program would identify said feature and determine its intensity and or variance in the Laplacian filtered image. In case the intensity or the variance exceeds a predefined threshold value the image is deemed in focus.

According to another embodiment of the invention, the reference marker is a self-adhesive sticker.

This embodiment allows for a particularly versatile and easy-to-use system. Reference markers may be printed as stickers and attached to the bottom portion in the appropriate location, such that an elaborate manufacturing of the colors of the reference marker directly on or in the material of the bottom portion is avoided.

According to another embodiment of the invention, the reference marker comprises more than 24 color patches, particularly 36 color-patches.

Particularly, the reference marker comprises 12 color patches comprising colors corresponding to the gamut of wound and skin tones. These colors particularly are (in Hex color code):
fdeec8; fde1b9; c5a57f; e1b899; c4857c; c38f7b; 6d1b13; 4e1612; 4f2012; a35e54; 814a42; 67413b.

Particularly, the reference marker comprises color patches with colors of the MacBeth ColorChecker. Particularly, color patches are arranged in a rectangular fashion, in rows and columns. in which the color patches are arranged According to another embodiment of the invention, the reference marker comprises the color patches with the colors of the MacBeth ColorChecker and the wound and skin tones.

According to another embodiment of the invention, the system further comprises a light source, particularly wherein the light source is configured to be controlled, particularly switched on an off, by means of the computer program of the mobile device, wherein the light source is further configured to provide diffuse illumination.

According to another embodiment of the invention, a preview image of the field of view of the camera and an image that has been recorded previously particularly with a sharpness value exceeding the threshold value are displayed on the display simultaneously before step a).

This embodiment allows the user to have a visual feedback on the quality/sharpness of the image to be recorded in form of an in-focus image that is displayed simultaneously with a camera previous image of the camera.

According to a second aspect the invention relates to a computer-implemented method for recording an image using a system according to the invention, wherein the method comprises the steps of:
- particularly, issuing an information by the mobile device, prompting the user to switch on the light source of the system, and/or to place the wound in the image region,
- upon user input, prompting the camera of the mobile device to record an image of the image region with a plurality of pixels comprising pixel values,
- determining an objective sharpness value by evaluating the pixel values of the pixels comprising the recorded reference maker at the processor of the mobile device, wherein the sharpness value is indicative of the sharpness of the recorded reference marker in the image,
- displaying a feedback information on a display of the mobile device, particularly wherein the feedback information is indicative of the sharpness value, wherein in case the sharpness is below a threshold value stored on the non-transitory storage medium, the feedback information indicates that the image has to be retaken,
- digitally storing the image in the non-transitory storage medium of the mobile device and/or transmitting the image from the mobile device to an external computer,
- particularly transmitting the image from the mobile device to an external computer for further processing and evaluation of the image region and the wound in particular.

Terms and definitions of the previous embodiments apply also to the computer-implemented method and vice versa terms and definitions provided in the context of the computer-implemented method apply for the system in an analogous fashion.

The user input may be provided in form of a haptic or touch interface of the camera or the mobile device. Alternatively, the user input may be provided via a sound or voice command of the user.

Evaluating the pixel values of the or all pixels comprising the recorded reference marker particularly comprises the steps of receiving the pixel values and filtering the pixel values with a predefined filter being configured to yield the sharpness value with the processor.

The following embodiments have been elaborated in further detail in the context of the system. These terms, examples of embodiments and definitions apply for the following embodiments as well.

According to another embodiment of the invention, the objective sharpness value is determined by applying a Laplacian filter to the pixels comprising the reference marker, wherein the objective sharpness value corresponds to a variance of the filtered pixels.

According to another embodiment of the invention, the method executes the step of automatically detecting the pixels in the image comprising the reference marker.

According to another embodiment of the invention, the method comprises the step of displaying an image previously recorded on the display of the device simultaneously with a live preview image of the camera.

According to a third aspect the invention relates to a computer program stored on a non-transitory storage medium, comprising computer program code that, when executed on a mobile device having a processor, a non-transitory storage medium, a camera and a display operably connected with each other, causes the mobile device to execute the steps of the computer-implemented method of the invention.

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.

Fig. 1 a schematic view of the system according to one embodiment the invention;

Fig. 2 a flow chart of the method according to the invention.

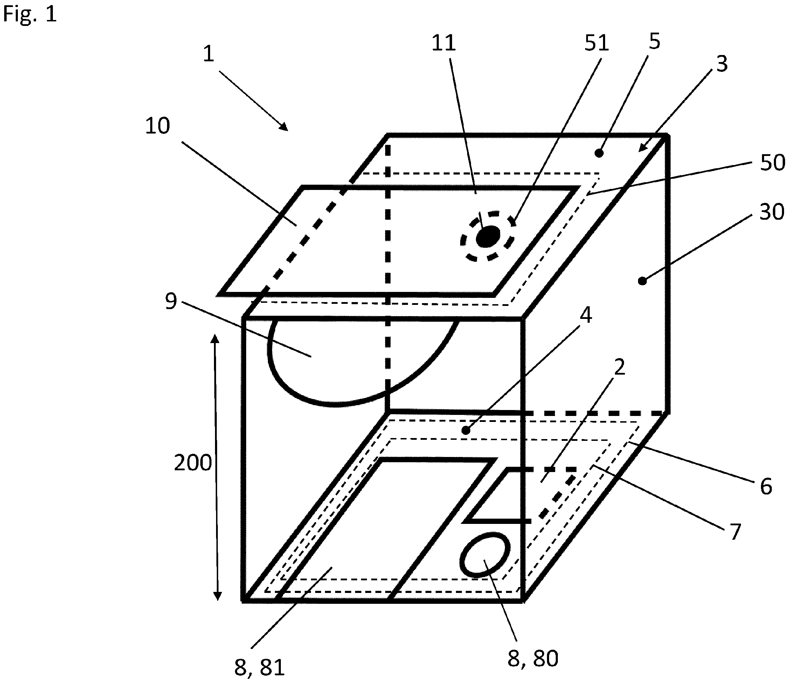

In Fig. 1 a schematic view of the system 1 is depicted. The system 1 comprises a mobile device 10 in form of a mobile phone with a camera 11. The mobile device 10 has a processor (not shown) and a non-transitory storage medium (not shown) such that a computer program stored on the non-transitory storage medium may be executed on the mobile device 10.

The exemplary system 1 further comprises a photo box 3 that has a bottom portion 4 and a top portion 5 that are spaced apart by a fixed distance 200 by means of a wall member 30. The top portion 5 comprises a receiving portion 50 with an opening 51, wherein the receiving portion 50 is configured to receive the mobile device 10 on an outside of the photo box 3, more particularly receiving the camera 11 of the mobile device 10, wherein the camera's field of view 6 may extend through the opening 51, when the mobile device 10 is arranged on the receiving portion 50. The mobile device 10 should be arranged with the camera 11 pointing inward the photo box 3 through the opening 51 toward the bottom portion 4. Due to the opening 51, it is possible for the camera 11 to capture an inside view of the photo box 3. The camera 11 may be a color camera as used conventionally in mobile devices.

The receiving portion 50 may comprise a contour or structure that allows for arranging the mobile device 10 at a specific orientation and position on the top portion 5. This allows for repeatedly arranging the mobile device 10 and the camera 11 at the same position on the top portion 5. This in turn allows for repeatedly and reliably capturing the same portion of the inside of the photo box 3.

The camera 11 has a field of view 6 that depends on the focal length and the camera specification. Typically, the field of view of cameras in mobile devices is within a well-known and predefined range. The photo box 3 is constructed such that an image region 7 at the bottom portion 4 lies within the field of view 6. Said region 7 may be arranged directly below the opening 51 of the receiving portion 50. This way, the field of view 6 of the camera 11 always comprises the image region 7 without the user having to worry about aligning the camera 11 to the image region 7. The image region 7 further comprises a reference marker 2, that may serve as a color adjustment tool and a ruler for images that are taken with the camera 11.

The reference marker 2 comprises a plurality of color patches, each patch having a different color. The color patches correspond for example to a MacBeth ColorChecker chart.

With the reference marker 2 the colors may be adjusted after the image is taken. This is important as for example due to differing illumination conditions and varying camera presets.

Furthermore, the size and the shape of the reference marker 2 is known. Alternatively, a variance of the Laplacian in the image of the reference marker 2 is known.

The reference marker 2 comprises at least some contrast steps that serve in a downstream processing of the image as a sharpness control feature.

The reference marker 2 further comprises color patches that correspond to typical skin and wound tones. This allows a particularly precise adjustment of the color space of the image in downstream processing.

The reference marker 2 is a sticker that is attached to the bottom portion 4 in the image region 7. This way, each time an image is taken from the image region 7, the reference marker 2 is part of it and visible in the image. The pixels comprising the reference marker 2 are of particular interest for determining the sharpness of the image. Therefore, instead of processing the whole image, in one embodiment, only the pixels comprising the reference marker 2 are processed, when analyzing a sharpness of the image. Any adjustment necessary to the color space of the image that is derived from the analysis of the pixels comprising the reference marker 2 is applied to the complete image.

The bottom portion 4 and particularly the inside of the photo box 3 may be colored in a neutral gray or a white color. This allows for a well-defined illumination and reflection property of the photo box 3.

The image region 7 comprises a wound placement portion 8 that is located laterally shifted with respect to the reference marker 2. The wound placement portion 8 is configured to receive an extremity, such as a finger, with a wound. In an image taken from the extremity at the wound placement portion 8, the wound as well as the reference marker 2 on the bottom portion 4 will be visible.

The extremity may be a finger. In order to place the wounded extremity in the image region 7, the photo box has at least one opening 80, for example in the wall members 30 or in the bottom portion 4 through which the extremity can be inserted in the photo box 3 into the image region 7.

The at least one opening 80 is arranged such that the extremity is not covering the reference marker 2.

In the example shown, the photo box 3 has a fingertip hole 80, through which a fingertip may be inserted onto the wound placement portion 8.

In the example of Fig. 1, the wound placement portion 8 is divided in two sections, the fingertip hole 80 and an extremity placement portion 81, both of which are in the image region 7.

In order to reliably provide a constant illumination, the photo box 3 comprises an illumination source 9 that may be controlled with the mobile device 10. For this purpose, the photo box 3 may comprise a corresponding antenna, a receiver and processors in order to receive and transmit data comprising instructions from the mobile device 10 configured to control the light source 9. The light source 9 may be an LED or an LED arrays.

In the example of Fig. 1, the light source 9 is arranged at the top portion 5 such that the camera 11 and the light source 9 face the image region 7 from the same side.

The invention further comprises a computer program that may be installed as an application on the mobile device 10 and that is configured to execute a method that is disclosed in the following.

In a first step 100, the computer program causes the display to display an information that asks the user to place the extremity in the image region and to place the camera in the receiving portion 50 of the photo box 3.

Once the user confirms that the extremity is in the image region 7 by means of a user input, such as a touch command issued via a touch display of the mobile device or a sound command, the computer program causes the camera 11 to capture 110 an image.

From the image an objective sharpness value is determined 120 by means of a variance of Laplacian filter applied to the pixels comprising the reference marker 2. The pixels comprising the reference marker 2 may be identified by a pattern matching method or a pattern detection method.

The variance of the Laplacian is compared to a threshold value that is stored on the non-transitory storage medium. If the variance of the Laplacian is below the threshold value the user is asked to repeat 130, 140 the recording of the image region 7, as this indicates an out-of-focus image.

It is noted that the variance of the Laplacian filter is calculated each time for a predefined number of pixels in which the reference marker is completely comprised. This allows for comparing images of different acquisition sessions.

The threshold value may be empirically determined or preinstalled. Alternatively, or additionally, the threshold value may be manually set or adjusted.

Each time an out-of-focus image is taken and the procedure is repeated, a log file is updated or generated that saves the out-of-focus trial information, however not the image.

In case the variance of the Laplacian is below the threshold value, the computer program may issue a signal 130, for example in form of a sound and/or in form of information note on the display of the mobile device asking the user to repeat 140 the recording of the wound and to potentially adjust the focus of the camera 11.

In order for the user to have a reference, the computer program may display 160 an image of a previous session that has an objective sharpness value that is deemed sufficiently high (i.e. an in-focus image) simultaneously to a live preview 105 of the camera image that would be currently recorded.

The user then may check image sharpness subjectively before providing the user input for capturing the image.

Once the variance of the Laplacian of the pixels with the reference marker 2 are above the threshold value in a recorded image, the image is adjusted for the colors by means of the reference marker 2 and its color patches by the processor.

The image is then stored 150 and/or transmitted to an external computer. There, a professional may analyze the wound on the image. In order to have an idea on the size of the features in the image, the computer program may overlay a scalebar on the image that is derived from the know reference marker size.

The computer program may have tools to interactively measure distances between features of the image.

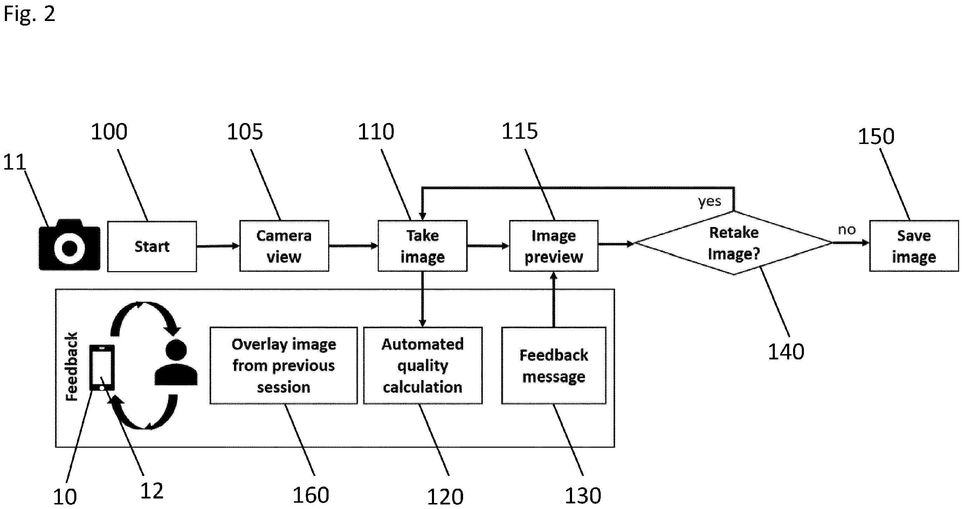

This work flow of the application is for example shown in Fig. 2 and shortly summarized again in the following:
In a first step 100, the application is started on the mobile device 10. The application causes a display 105 of the current camera view of the mobile device 10, so that a user may be able to control a position of the wound and the reference marker 2 in the image.

Optionally, the application may prompt the user to switch on light - for example if light conditions are unfavorable - and/or to place the wound in the image region.

Upon user input 110, the application causes the camera of the mobile device to record an image of the image region, i.e. the current camera view / field of view 6.

The recorded image is displayed 115 to the user by the application on the display 12 of the mobile device 10.

The recorded image is analyzed 120 by the processor of the mobile device by determining an objective sharpness value of the reference marker 2 in the image. The objective sharpness value may be a variance of the Laplacian filter applied to the pixel comprising the reference marker.

In case the objective sharpness value is below a predefined threshold value, the application causes the display of the mobile device to display a message 130 that the image has to be retaken 140.

Optionally, an overlay of a previously recorded image of the wound and the reference marker and the currently recorded image or the current camera view is displayed 160 on the display 12. This may help the user to retake the image having a higher image quality, as assessed by means of the objective sharpness value.

In case the objective sharpness value of the recorded image is higher than the threshold value the recorded image is stored 150 together with a date and time as well as with other image parameters. The image may be further processed in order to adjust for color deviations in the image. This adjustment may be based on the known colors from the reference marker 2. This way a consistent color space and grading of the wound in the image is achieved. The adjusted image may be stored and transmitted to an external computer, where the image of the wound may be assessed by medical personal.

The system and the method according the invention allow for the generation of high-quality wound images recorded by the user in a simple and reliable fashion. This in turn allows for medical personal to be provided with image of sufficiently high quality in order to perform an assessment of the wound healing process.

## Claims

1. A system (1) for recording a wound image comprising the components:
- a computerized mobile device (10), such as a mobile phone, comprising a camera (11), a processor, a non-transitory storage medium and a display (12) operably connected with each other,
- a reference marker (2) for color and sharpness evaluation comprising a plurality of contrast steps and three or more color-patches forming a gamut comprising red, green and blue,
- wherein the non-transitory storage medium comprises a computer program stored thereon, wherein the computer program, when executed on the processor of the mobile device (10), executes at least the steps of:
a) upon user input (100), causing the camera (11) of the mobile device (10) to record an image of an image region (7) with the wound and the reference marker, wherein the image comprises a plurality of pixels comprising pixel values,
b) determining (120) an objective sharpness value by evaluating the pixel values of the pixels comprising the recorded reference marker (2), wherein the sharpness value is indicative of the sharpness of the recorded reference marker (2) in the image,
c) displaying (130) a feedback information on the display of the mobile device (10), wherein in case the sharpness value is below a threshold value stored in the non-transitory storage medium, the feedback information indicates that the image has to be retaken,
d) repeating (140) steps a) to c) with a different focus of the camera (11) until the sharpness value exceeds the threshold value,
e) digitally storing (150) the image on the non-transitory storage medium of the mobile device (10) and/or transmitting the image from the mobile device to an external computer.

2. The system (1) according to claim 1, wherein the system (1) further comprises:
- a photo box (3) comprising a bottom portion (4) and top portion (5) spaced apart by a fixed distance (200), wherein the top portion (5) is configured to receive the mobile device (10) such that a field of view (6) of the camera (11) comprises the image region (7) at the bottom portion (4), wherein the reference marker (2) is comprised by the image region (7) of the bottom portion (4),
- a wound placement portion (8) comprised by the image region (7), wherein the wound placement portion (8) is located next to the reference marker (2) and configured to receive an extremity with the wound, particularly a finger.

3. The system (1) according to claim 1 or 2, wherein the objective sharpness value is determined by applying a Laplacian filter to the pixels comprising the reference marker (2), wherein the objective sharpness value corresponds to a variance of the filtered pixels.

4. The system (1) according to one of the preceding claims, wherein the computer program is further configured to execute the step of automatically detecting the pixels in the image comprising the reference marker (2).

5. The system (1) according to any of the preceding claims, wherein the reference marker (2) is a self-adhesive sticker.

6. The system (1) according to any of the preceding claims, wherein the reference marker (2) comprises spatially separated color-patches, each with a predefined color.

7. The system (1) according to any of the preceding claims, wherein some of the color-patches of the reference marker (2) have skin and wound colors.

8. The system (1) according to any of the preceding claims, wherein the system (1) further comprises a light source (9), particularly wherein the light source (9) is configured to be controlled, particularly switched on an off, by means of the computer program of the mobile device (10), wherein the light source (3) is further configured to provide diffuse illumination to the image region (7), particularly wherein the light source (3) is arranged at the photo box (3).

9. The system (1) according to any of the preceding claims, wherein a preview image of the field of view (6) of the camera (11) and an image that has been recorded previously particularly with a sharpness value exceeding the threshold value are displayed (160) on the display (12) simultaneously before step a).

10. A computer-implemented method for recording an image using a system (1) according to one of the preceding claims, wherein the method comprises the steps of:
- Particularly, issuing an information by the device, prompting the user to switch on the light source (9) of the system (1) and to place the wound in the image region (7) comprising the reference marker (2),
- upon user input (110), prompting the camera (11) of the mobile device (10) to record an image of the image region (7) with the wound and the reference marker (2), wherein the image region (7) comprises a plurality of pixels comprising pixel values,
- determining (120) an objective sharpness value by evaluating the pixel values of the pixels comprising the recorded reference maker (2), wherein the sharpness value is indicative of the sharpness of the recorded reference marker (2) in the image,
- displaying (130) a feedback information on a display (12) of the mobile device (10), particularly wherein the feedback information is indicative of the sharpness value, wherein in case the sharpness is below a threshold value stored on the non-transitory storage medium, the feedback information indicates that the image has to be retaken,
- digitally storing (150) the image in the non-transitory storage medium of the mobile device (10) and/or transmitting the image from the mobile device to an external computer.

11. The method according to claim 10, wherein the objective sharpness value is determined by applying a Laplacian filter to the pixels comprising the reference marker (2), wherein the objective sharpness value corresponds to a variance of the filtered pixels.

12. The method according to claim 10 or 11, wherein the method executes the step of automatically detecting the pixels in the image comprising the reference marker (2).

13. The method according one of the claims 10 to12, wherein the method comprises the step of displaying (160) an image previously recorded on the display (12) of the mobile device (10) simultaneously with a live preview image of the camera (10).

14. Computer program stored on a non-transitory storage medium, comprising computer program code that, when executed on a mobile device having a processor, a non-transitory storage medium, a camera and a display operably connected with each other, causes the mobile device to execute the steps of the computer-implemented method of any of the claims 10 to 13.
